# EUROPÄISCHE PATENTANMELDUNG

(11) **EP 4 811 066 A1**
(43) Veröffentlichungstag der Anmeldung: **23.09.2026**
(21) Anmeldenummer: 25164169.2
(22) Anmeldetag: 17.03.2025
(51) Int. Cl.: G05D 1/242

(54) **VERFAHREN ZUM BELADEN UND/ODER ENTLADEN EINES LADERAUMS MIT EINEM AUTONOMEN LADEFAHRZEUG UND ABSICHERUNGSSYSTEM**

(71) Anmelder: SICK AG, 79183 Waldkirch (DE)
(72) Erfinder: Ams, Mathias, 79211 Denzlingen (DE)
(74) Vertreter: Manitz Finsterwald Patent- und Rechtsanwaltspartnerschaft mbB

(57) **Zusammenfassung**

Eine Ausführungsform betrifft ein Verfahren zum Beladen und/oder Entladen eines Laderaums, insbesondere des Laderaums eines Transportfahrzeugs, mit einem autonomen Ladefahrzeug, das mindestens einmal in den Laderaum einfährt, um mindestens ein Ladeobjekt abzuholen und/oder abzulegen. Dabei wird ein Zugangsbereich des Laderaums durch eine stationäre, an dem Zugangsbereich angeordnete Sensoreinrichtung abgesichert. Das Ladefahrzeug wird durch eine an dem Ladefahrzeug angeordnete mobile Sensoranordnung abgesichert. Die stationäre Sensoreinrichtung und die mobile Sensoranordnung kommunizieren miteinander. Das Ladefahrzeug wird vor einem Einfahren in den Laderaum unter Verwendung eines von der stationären Sensoreinrichtung umfassten Identifikationssensors und mindestens einer ersten von der mobilen Sensoranordnung bereitgestellten Identitätsinformation durch die stationäre Sensoreinrichtung eindeutig identifiziert.

## Beschreibung

Die Erfindung betrifft ein Verfahren zum Beladen und/oder Entladen eines Laderaums, insbesondere des Laderaums eines Transportfahrzeugs, mit einem autonomen Ladefahrzeug, sowie ein Absicherungssystem zur Absicherung des Beladens und/oder Entladens eines Laderaums, insbesondere des Laderaums eines Transportfahrzeugs, mit einem autonomen Fahrzeug nach dem Oberbegriff der unabhängigen Ansprüche.

Das Beladen und Entladen eines Transportfahrzeugs, beispielsweise eines Lastkraftwagens, Lkws, insbesondere dessen Aufliegers, an einer Laderampe, welches als Truck Loading bezeichnet wird, erfolgt bislang manuell unter Einsatz von bemannten oder personengeführten Gabelstaplern. Dabei liegt es in der Verantwortung des Staplerfahrers oder einer Bedienperson, auf Personen zu achten und Unfälle zu vermeiden. Zwar werden im Logistikbereich bereits autonome Fahrzeuge, sogenannte Automated Guided Vehicles, AGVs, eingesetzt, die grundsätzlich in der Lage wären, das Truck Loading zu übernehmen oder zumindest einen Mischbetrieb zwischen manuellem und vollautomatisiertem Betrieb zu ermöglichen. Allerdings fehlt eine Lösung, um während des Be- und Entladevorgangs sicherzustellen, dass sich keine Person im Auflieger oder auf dem Weg dorthin befindet. **In** anderen automatisierten Logistikanwendungen arbeiten autonome Fahrzeuge ausschließlich in für Personen abgesperrten Bereichen. Dies ist jedoch an einer Laderampe nicht umsetzbar.

Autonome Fahrzeuge überwachen bereits zur Unfallvermeidung ihre Fahrt mit Sensoren, die an den jeweiligen AGVs angebracht sind. Hierbei wird beispielsweise ein Schutzfeld in Fahrtrichtung des AGVs erzeugt bzw. überwacht. Wird ein Objekt in dem Schutzfeld erkannt, so wird eine Gefahrensituation angenommen und das AGV abgebremst oder gänzlich gestoppt. Dazu wird eine berührungslos wirkende Schutzeinrichtung, die auf einem entsprechenden Sensor basiert, eingesetzt. Das Eindringen eines Objekts oder einer Person, insbesondere eines Körperteils einer Person, in ein Schutzfeld wird mit Hilfe eines oder mehrerer entsprechender Sensoren erkannt, ohne dass ein unmittelbarer mechanischer Kontakt erfolgt. Entsprechende Sensoren basieren auf unterschiedlichen physikalischen Prinzipien. Beispielsweise werden optische Sensoren, akustische Sensoren, beispielsweise Ultraschallsensoren, induktive oder kapazitive Sensoren, sowie Radarsensoren eingesetzt. Zur Unfallvermeidung verwendete Sensoren müssen zuverlässig arbeiten und aus diesem Grund hohe Sicherheitsanforderungen erfüllen, beispielsweise die Norm EN ISO 13849-1 für Maschinensicherheit und die Gerätenorm EN IEC 61496 für berührungslos wirkende Schutzeinrichtungen (BWS). Zur Erfüllung dieser Sicherheitsnormen sind eine Reihe von Maßnahmen zu treffen, wie die sichere elektronische Auswertung durch redundante, diversitäre Elektronik, Funktionsüberwachung oder Überwachung der Verschmutzung optischer Bauteile.

Eine herkömmliche Schutzfeldüberwachung funktioniert jedoch in einem Auflieger nicht. Die Ladung ist aus ökonomischen Gründen sehr dicht und ohne Leerräume gepackt. Mit einer Schutzfeldüberwachung wird üblicherweise nur festgestellt, ob das Schutzfeld frei von Objekten ist. Das wäre innerhalb des Aufliegers so gut wie nie der Fall, so dass das Fahrzeug praktisch nicht mehr aus dem Stillstand herauskommt. Es gibt Ansätze, zwischen zulässigen und nicht zulässigen Objekten in einem Schutzfeld zu differenzieren, aber besonders unter den genannten dichten Lagerbedingungen ist heutige Sensorik nicht in der Lage, verlässlich zwischen Personen und Ladegut zu unterscheiden.

Eine Aufgabe besteht folglich darin, eine sichere Lösung für das automatisierte Beladen bzw. Entladen des Laderaums, insbesondere des Laderaums eines Transportfahrzeugs, also das Beladen bzw. Entladen des Laderaums unter Verwendung von mindestens einem autonomen Fahrzeug anzugeben.

Die Aufgabe wird gelöst durch das Verfahren sowie das Absicherungssystem der unabhängigen Patentansprüche. Weiterbildungen und Ausgestaltungen der Erfindung sind jeweils Gegenstand der abhängigen Patentansprüche.

Eine Ausführungsform der Erfindung betrifft ein Verfahren zum Beladen und/oder Entladen eines Laderaums, insbesondere des Laderaums eines Transportfahrzeugs, mit einem autonomen Ladefahrzeug, das mindestens einmal in den Laderaum einfährt, um mindestens ein Ladeobjekt abzuholen und/oder abzulegen. Ein Zugangsbereich des Laderaums wird durch eine stationäre, an dem Zugangsbereich angeordnete Sensoreinrichtung abgesichert. Das Ladefahrzeug wird durch eine an dem Ladefahrzeug angeordnete mobile Sensoranordnung abgesichert. Die stationäre Sensoreinrichtung und die mobile Sensoranordnung kommunizieren miteinander. Das Ladefahrzeug wird vor einem Einfahren in den Laderaum unter Verwendung eines von der stationären Sensoreinrichtung umfassten Identifikationssensors und mindestens einer ersten von der mobilen Sensoranordnung bereitgestellten Identitätsinformation durch die stationäre Sensoreinrichtung eindeutig identifiziert.

Die erfindungsgemäße Lösung sieht vor, dass das autonome Ladefahrzeug vor der Einfahrt in den Laderaum eindeutig identifiziert wird. Das bedeutet, dass die Identifikation des autonomen Ladefahrzeugs funktional sicher ist. Dadurch ist gewährleistet, dass lediglich ein ordnungsgemäß identifiziertes Ladefahrzeug zum Be- und/oder Entladen in den Laderaum einfahren darf. Gleichzeitig wird sichergestellt, dass ansonsten keine Person und kein Objekt den Zugangsbereich passieren. Damit wird ein automatisiertes Be- und Entladen des Laderaums auf sichere Art und Weise ermöglicht.

Ein Laderaum ist ein beispielsweise durch Wände abgeschlossener und deshalb nur durch den Zugangsbereich zugänglicher Bereich, in dem als Ladeobjekte bezeichnete Waren oder sonstige Objekte eingelagert werden, vorzugsweise für einen Transport wie im Falle eines Containers, Anhängers oder Aufliegers. Ein Ladefahrzeug fährt dafür mindestens einmal, in der Regel vielfach wiederholt, in den Laderaum, um mindestens ein Ladeobjekt abzulegen und/oder abzuholen. Das Ladefahrzeug ist vorzugsweise ein autonomes Fahrzeug, wie ein AGV oder ein Autonomous Mobile Robot, AMR. Alternativ kann das Ladefahrzeug doch von einem Fahrer geführt werden. Dann ist der Fahrer automatisch durch die Erfindung gegen mögliche Unfälle mit Personen oder sonstigen Objekten in seinem Arbeitsbereich geschützt.

Der Zugangsbereich, der die einzige Möglichkeit darstellt, in den Laderaum zu gelangen, ist durch die stationäre Sensoreinrichtung abgesichert. Beispielsweise ist die stationäre Sensoreinrichtung dazu ausgelegt, einen Zugang von Objekten zu erkennen und die Sicherheitsfunktion "Zugangsabsicherung", insbesondere "optische Zugangsabsicherung" zu realisieren. Bei Detektion eines Objekts wird ein entsprechende Maßnahme ausgelöst. Auf diese Art und Weise wird der Zugangsbereich sozusagen gegen Betreten von Objekten abgesichert. Das Ladefahrzeug selbst ist von der mobilen Sensoranordnung abgesichert. Die stationäre Sensoreinrichtung und mobile Sensoranordnung sorgen gemeinsam unter Zuhilfenahme der Kommunikation dafür, dass das Ladefahrzeug während des Be- und Entladens nicht mit unerwarteten Objekten kollidiert und insbesondere Unfälle mit Personenschäden vermieden werden. Bei der Kommunikation werden zum Beispiel Daten, Informationen und/oder Steuersignale zwischen der stationären Sensoreinrichtung und die mobilen Sensoranordnung ausgetauscht.

Die stationäre Sensoreinrichtung umfasst neben dem erfindungsgemäßen Identifikationssensor mindestens einen weiteren Sensor, welcher den Zugangsbereich in bekannter Art und Weise absichert. Dieser Sensor kann beispielsweise als optischer Sensor, wie Kamera, Laserscanner oder Lichtgitter, ausgeführt sein und erkennt vorzugsweise die Anwesenheit eines Objekts im Zugangsbereich. Bis auf die Ausnahmesituation des sicher identifizierten Ladefahrzeugs im Zugangsbereich ist dieser undurchlässig, jedenfalls können Objekte nicht unbemerkt eindringen.

Der Identifikationssensor ist ein weiterer Sensor, welcher an dem Zugangsbereich angeordnet ist und in Verbindung mit der von der mobilen Sensoranordnung bereitgestellten Identitätsinformation ein eindeutiges Identifizieren des Ladefahrzeugs ermöglicht. Insbesondere weist die erste Identitätsinformation einen Sicherheitsmechanismus auf. Der Identifikationssensor kann als Lesegerät für eine Radiofrequenzidentifizierung, Englisch: Radio Frequency Identification, RFID, als optisches Lesegerät für Codes wie Barcode oder QR-Code oder als Basisstation für eine Nahbereichsfunkkommunikation, beispielsweise Ultrabreitband, Englisch: Ultra Wide Band, insbesondere als UWB-Anker, ausgeführt sein, abhängig von der Applikation. Die von der mobilen Sensoranordnung bereitgestellte Identitätsinformation ist auf den Identifikationssensor abgestimmt.

Das Ladefahrzeug wird durch die mobile Sensoranordnung abgesichert. Dazu umfasst die mobile Sensoranordnung mindestens einen Sensor, beispielsweise einen Laserscanner, welcher zumindest außerhalb des Laderaums die Sicherheitsfunktion "Kollisionsvermeidung" realisiert. Damit wird außerhalb des Laderaums sichergestellt, dass weder Objekte noch Personen mit dem autonomen Ladefahrzeug, AGV oder AMR, in direkten Kontakt kommen. Sicherheitsabstände werden eingehalten und Gefährdungen für Personen sind ausgeschlossen.

Die Erfindung ermöglicht mit Vorteil ein automatisiertes Be- und Entladen, welches die Sicherheitsaspekte berücksichtigt. Dabei ist es im Gegensatz zu bisherigen Ansätzen nicht mehr erforderlich, den gesamten Aktionsbereich des Ladefahrzeugs für Personen zu sperren. Folglich dürfen sich Personen durchaus im Umfeld des Ladefahrzeugs aufhalten und können auch bei drohenden Störungen rechtzeitig eingreifen oder ergänzende Arbeitsschritte vornehmen, ohne dass es zu Unfällen kommt.

Gemäß einer Weiterbildung wird ein Zeitpunkt, an welchem das Ladefahrzeug eindeutig identifiziert wird, unter Verwendung einer ersten sicheren Positionsbestimmung ermittelt.

Damit die eindeutige Identifizierung des Ladefahrzeugs zu der gewünschten funktionalen Sicherheit führt, bzw. die gewünschte funktionale Sicherheit ermöglicht, ist es bei einem auf den Zugangsbereich bzw. Laderaum zufahrenden AGV wichtig, den richtigen Zeitpunkt für diese Identifikation zu finden. Eine Gefährdung von Personen wie auch ein Einfahren eines unbefugten, also nicht identifizierten AGVs in den Laderaum soll zu jeder Zeit ausgeschlossen sein. Erfindungsgemäß wird dieser Zeitpunkt mit Hilfe der ersten sicheren Positionsbestimmung ermittelt.

Gemäß einer Weiterbildung umfasst die erste sichere Positionsbestimmung mindestens einen Durchlauf der folgenden Schritte:
Erfassen eines Abstands des Ladefahrzeugs von dem Zugangsbereich durch die stationäre Sensoreinrichtung,
Bestimmen einer Position des Ladefahrzeugs durch seine mobile Sensoranordnung und Übermitteln dieser Position an die stationäre Sensoreinrichtung, Plausibilisieren der übermittelten Position des Ladefahrzeugs mit dem erfassten Abstand durch die stationäre Sensoreinrichtung, insbesondere unter Einsatz eines Trackingalgorithmus, und
wenn die plausibilisierte Position einer vordefinierten ersten Position entspricht, Starten des eindeutigen Identifizierens des Ladefahrzeugs durch die stationäre Sensoreinrichtung,
wobei die vordefinierte erste Position sich so nahe an dem Zugangsbereich befindet, dass keine Person zwischen das Ladefahrzeug und den Zugangsbereich passt.

Bei der ersten sicheren Positionsbestimmung wird demzufolge die Position des autonomen Ladefahrzeugs zweifach bestimmt, nämlich einmal durch die mobile Sensoranordnung und zum zweiten durch die stationäre Sensoreinrichtung. Die Position des AGV wird dabei jeweils bezogen auf die nicht veränderliche Position der stationären Sensoranordnung, welche an dem Zugangsbereich angebracht ist, ermittelt. Unter Verwendung mindestens eines Sensors der stationären Sensoreinrichtung, beispielsweise einer Kamera oder eines Laserscanners, wird der momentane Abstand des Ladefahrzeugs ermittelt. Zusätzlich bestimmt das Ladefahrzeug selbst seine Position und kommuniziert diese an die stationäre Sensoreinrichtung. Dort findet eine Plausibilisierung statt, d.h. es wird überprüft, ob die übermittelte Position mit dem bestimmten Abstand weitestgehend übereinstimmt. Sofern diese Schritte mehrfach ausgeführt werden, sofern also das Ladefahrzeug seine Position mehrfach während eines Annäherns an den Zugangsbereich bestimmt und auch die stationäre Sensoreinrichtung mehrfach den Abstand desselben Ladefahrzeugs erfasst, kann bei der Plausibilisierung auch ein sogenannter Trackingalgorithmus verwendet werden, der ein Verfolgen des Fahrwegs des Ladefahrzeugs ermöglicht. Bei weitestgehender Übereinstimmung liegt eine plausibilisierte Position vor. Wenn die plausibilisierte Position der vordefinierten ersten Position entspricht, also so nahe an dem Zugangsbereich liegt, dass keine Person zwischen das Ladefahrzeug und den abgesicherten Zugangsbereich passt, wird das oben beschriebene eindeutige Identifizieren des Ladefahrzeugs ausgelöst.

In einer beispielhaften Implementierung basiert ein derartiger Trackingalgorithmus auf einem Objektdetektionsalgorithmus. Dieser arbeitet beispielsweise auf dem Prinzip der Hintergrundsubtraktion. Dabei wird beim Einrichten der stationären Sensoreinrichtung der Hintergrund ohne Objekte aufgenommen und dient anschließend als Referenz. Im laufenden Betrieb wird für jede Aufnahme einer Kamera der stationären Sensoreinrichtung, beispielsweise einer sogenannten Timeof-Flight, TOF-, Kamera, eines Objekts, welches unter der Sensoreinrichtung hindurchfährt, bzw. darauf zufährt eine Abbildung in Form einer Tiefenkarte erzeugt. Die Referenz und die Tiefenkarte der aufgenommenen Objekte werden algorithmisch subtrahiert, so dass die Abbildung des Objekts in Form zusammenhängender Pixel als Ergebnis verbleibt. Die zusammenhängenden Pixel werden gruppiert, um zusammenhangende Strukturen zu identifizieren. Die zusammenhängenden Strukturen werden beispielsweise anhand ihres Volumens klassifiziert. Die Merkmale für die Klassifizierung werden im Vorfeld mittels Konfiguration festgelegt. Zum Beispiel gibt es unterschiedliche Klassen für zugelassene Fahrzeuge. Die zusammenhängenden Strukturen werden vermessen. Für die aktuell von der TOF-Kamera aufgenommene Abbildung werden die zusammenhängenden Strukturen als Objekte mit weiteren Attributen wie geometrische Abmessung, Klassifikation, Position, Korrelationsintervall, Zeitstempel etc. in einer Kamera-Abbildungs-Datenstruktur gespeichert. Das beschriebene Klassifizieren und Abspeichern der zusammenhängenden Strukturen werden unter Umständen wiederholt bis alle zusammenhängenden Strukturen einer aufgenommenen Abbildung klassifiziert und vermessen sind. Der Algorithmus arbeitet mit einer weiteren Datenstruktur, in der die Trackingdaten abgelegt werden. In dieser Tracking-Datenstruktur werden die Trackingdaten aller Objekte gespeichert, die sich im Detektionsbereich der statischen Sensoreinrichtung befinden. In der Tracking-Datenstruktur werden für jedes Objekt einmalig die Objekt-ID, Klassifikation, geometrischen Abmessungen, und für jedes Abbildungsintervall die Position, Geschwindigkeitsvektor und Zeitstempel gespeichert. Mit jeder neuen Abbildung werden die Objekte aus Kamera-Abbildungs-Datenstruktur mit der Tracking-Datenstruktur verglichen. Ergibt sie eine eindeutige Korrelation zwischen einem bereits in der Tracking-Datenstruktur gespeicherten Objekt und der Kamera-Abbildungs-Datenstruktur, dann wird dieses Objekt dem bestehenden Track zugeordnet. Eine eindeutige Korrelation ist beispielsweise dann gegeben, wenn die folgenden Bedingungen erfüllt sind:
a) Die letzte in der Tracking-Datenstruktur gespeicherte Position summiert mit einem Geschwindigkeitsvektor, welcher mit einem auf den Zeitstempel bezogenen Delta multipliziert ist, liegt im Korrelationsintervall des Objektes aus der Kamera-Abbildungs-Datenstruktur
b) Die geometrischen Abmessungen des Objektes aus der Tracking-Datenstruktur stimmen mit den geometrischen Abmessungen des Objektes aus der Kamera-Abbildungs-Datenstruktur überein, wobei eine Transformation bezüglich der Perspektive berücksichtigt wird.

Mit der Zuordnung zu einem bestehenden Track werden in der Tracking-Datenstruktur folgende Werte gespeichert bzw. aktualisiert oder erweitert: Position, Geschwindigkeitsvektor, Zeitstempel. Kann ein Objekt aus der Kamera-Abbildungs-Datenstruktur keinem Objekt aus der Tracking-Datenstruktur zugeordnet werden, so wird in der Tracking-Datenstruktur ein neues Objekt angelegt, vorausgesetzt das folgende Plausibilitätskriterium ist erfüllt: Die Position des Objektes ist realistisch, d.h. es ist möglich innerhalb eines Erfassungsintervalls der stationären Sensoreinrichtung die Distanz von außerhalb des Erfassungsbereichs zur aktuellen Erfassungsposition zurück zu legen.

Die erste Position orientiert sich an anthropometrischen Maßen, wobei ein Körper typischerweise in den hier relevanten Querschnittsmaßen jeweils größer als beispielsweise 20 cm, 30 cm, 50 cm oder 70 cm ist.

Durch Einsatz der eindeutigen Identifikation des autonomen Ladefahrzeugs in Verbindung mit der sicheren Positionsbestimmung wird es möglich, das Be- und Entladen des Laderaums unter Gewährleistung der funktionalen Sicherheit vollständig zu automatisieren. Damit kann beispielsweise der Betrieb von Logistikzentren auch in wirtschaftlicher Hinsicht optimiert werden.

In einer weiteren Ausführungsform erfolgt das Bestimmen der Position des Ladefahrzeugs durch seine mobile Sensoranordnung unter Verwendung eines Lokalisierungssystems, welches auf einer oder mehrerer der folgenden Maßnahmen basiert: einer in der mobilen Sensoranordnung hinterlegten Karte, einer Erkennung optischer oder physischer Marker, die im Zugangsbereichs angebracht sind, einer Indoor-Navigation.

Das Ladefahrzeug bzw. die mobile Sensoranordnung verfügt demgemäß über ein Lokalisierungssystem, welches in einer Steuer- und Auswertungseinheit der mobilen Sensoranordnung implementiert sein kann. In dieser sind beispielsweise auf einer Karte die Laderampe als sicherheitsrelevante Position hinterlegt. Beispielsweise wird, sobald das Lokalisierungssystem erkennt, dass sich das Ladefahrzeug in diesem sicherheitsrelevanten Bereich der Laderampe befindet, diese Position an die stationäre Sensoranordnung übermittelt. Alternativ oder zusätzlich kann das Lokalisierungssystem des autonomen Ladefahrzeugs in fachüblicher Art und Weise auch auf der Erkennung optischer oder physischer Marker im Zugangsbereich basieren. Zudem kann hierfür eine Methode der Indoor-Navigation eingesetzt werden, beispielsweise basierend auf Bluetooth Low Energy, WLAN oder UWB.

Gemäß einer Weiterbildung werden beim eindeutigen Identifizieren des Ladefahrzeugs folgende Schritte ausgeführt:
Berührungsloses Auslesen der von der mobilen Sensoranordnung bereitgestellten ersten Identitätsinformation durch den Identitätssensor der stationären Sensoreinrichtung,
Überprüfen der ersten Identitätsinformation durch die stationäre Sensoreinrichtung unter Verwendung einer gespeicherten Identität und einer zweiten von der mobilen Sensoranordnung übermittelten Identitätsinformation, welche sich von der ersten Identitätsinformation unterscheidet
Bei der eindeutigen Identifizierung oder Identifikation des Ladefahrzeugs wird zumindest die erste Identitätsinformation verwendet. Diese wird von der stationären Sensoreinrichtung überprüft. Dabei findet beispielsweise ein Abgleich der übermittelten Information mit der gespeicherten Identität statt. Zusätzlich wird, falls die erste Identitätsinformation nicht über einen Sicherheitsmechanismus verfügt, eine zweite von der mobilen Sensoranordnung übermittelte Identitätsinformation verwendet. Diese wird beispielsweise auf einem anderen Weg übermittelt und unterscheidet sich von der ersten Identitätsinformation beispielsweise bezüglich der Quelle. Sofern die für die erste Identitätsinformation hinterlegte Identität mit einer für die zweite Identitätsinformation hinterlegten Identität übereinstimmt, ist das Ladefahrzeug eindeutig identifiziert. Dieser Vorgang des Identifizierens kann auch als Authentifizieren bezeichnet werden.

In einer Weiterbildung erfolgt das berührungslose Auslesen der von der mobilen Sensoranordnung bereitgestellten ersten Identitätsinformation unter Verwendung einer der folgenden Mittel: Radiofrequenzidentifizierung, RFID, optisches Auslesen, Nahbereichsfunkkommunikation, zum Beispiel UWB. Die bereitgestellte erste Identitätsinformation umfasst dementsprechend eines der folgenden, eine Radiofrequenzidentifizierungs-Transponder-ID, einen Barcode, einen QR-Code, eine Nahbereichsfunkkommunikations-Transponder-ID, zum Beispiel UWB-Transponder-ID.

Passend zu dem Identitätssensor der stationären Sensoreinrichtung erfolgt das Auslesen der ersten Identitätsinformation berührungslos unter Verwendung einer der oben aufgeführten Alternativen. Ein Transponder kann auch als Tag oder Funketikett bezeichnet werden. Jedem Transponder ist eine eindeutige Identität, sprich ID, zugeordnet.

In einer Weiterbildung erfolgt das Übermitteln der zweiten Identitätsinformation der mobilen Sensoranordnung an die stationäre Sensoreinrichtung über eine drahtlose Kommunikationseinrichtung, insbesondere ein drahtloses lokales Netzwerk, insbesondere ein WLAN. Die zweite Identitätsinformation ist dementsprechend eine Gerätekennung, insbesondere eine Medium Access Control, MAC, Adresse, oder eine applikationsspezifische Kennung..

In einer beispielhaften Realisierung kann die zweite Identitätsinformation über das WLAN, welches auch zur Kommunikation zwischen der mobilen Sensoranordnung und der stationären Sensoreinrichtung verwendet wird, beispielsweise im Rahmen einer Anmeldung des Ladefahrzeugs an der stationären Sensoreinrichtung, gesendet werden. Die Gerätekennung ist bekanntermaßen eindeutig. Diese Gerätekennung kann somit auf einfache Art und Weise beim Überprüfen der ersten Identitätsinformation wie oben beschrieben eingesetzt werden. Die applikationsspezifische Kennung bezeichnet eine Kennung oder Adresse, welche sich auf die Applikationsschicht des OSI-Referenzmodells bezieht.

In einer Weiterbildung wird nach einer erfolgreichen eindeutigen Identifizierung des Ladefahrzeugs die Absicherung des Zugangsbereichs durch die stationäre Sensoreinrichtung derart angepasst, dass ein Durchfahrtkorridor für ein Einfahren des Ladefahrzeugs in den Laderaum geschaffen wird. Zudem wird die Absicherung der mobilen Sensoranordnung nahezu zeitgleich deaktiviert. Der Durchfahrtkorridor wird geschlossen, sobald das Ladefahrzeug den Zugangsbereich passiert hat. Ab diesem Zeitpunkt sichert die stationäre Sensoreinrichtung den Zugangsbereich ab, indem ein Zugang durch ein Objekt erkannt wird.

Erfindungsgemäß trifft die stationäre Sensoreinrichtung die Entscheidung, ob ein Ladefahrzeug, welches in den Laderaum einfahren möchte, passieren darf. Sofern das Ladefahrzeug wie beschrieben erfolgreich identifiziert wurde und sich das Ladefahrzeug in der richtigen Position vor der stationären Sensoreinrichtung befindet, fällt die Entscheidung positiv aus, und der Durchfahrtkorridor für das Ladefahrzeug wird geschaffen. Durch ein entsprechendes Signal von der stationären Sensoreinrichtung an die mobile Sensoranordnung wird die mobile Sensoranordnung dazu gebracht, ihre Absicherung, welche eine Kollisionsvermeidung sicherstellt, abzuschalten. Anschließend wird das Ladefahrzeug angewiesen, weiterzufahren. Beim Schaffen des Durchfahrtkorridors erfolgt in der stationären Sensoreinrichtung ein partielles Stummschalten, Englisch Muting, der beispielsweise optischen Zugangsabsicherung. Partiell bezieht sich dabei auf einen Bereich, welcher von dem Zugangsbereich umfasst ist, und größenmäßig an die Abmaße des Ladefahrzeugs, insbesondere dessen Breite, angepasst ist. Somit wird das Muting so eng ausgelegt, dass keine Personen zwischen das Ladefahrzeug und die Absicherung der stationären Sensoreinrichtung passt. Der nicht stumm geschaltete Teil des Zugangsbereichs, der außerhalb des Durchfahrtkorridors liegt, wird auch während der Durchfahrt des Ladefahrzeugs weiterhin von der stationären Sensoreinrichtung abgesichert. Folglich kann keine Person unbemerkt in den Durchfahrtkorridor eindringen oder während der Durchfahrt des Ladefahrzeugs neben diesem unbemerkt in den Laderaum gelangen. Sobald das Ladefahrzeug komplett, d.h. in seiner vollen Länge, den Zugangsbereich passiert hat und sich somit im Laderaum befindet, wird das partielle Stummschalten beendet und der Durchfahrtkorridor wieder geschlossen. Das Ladefahrzeug kann nun ein oder mehrere Ladeobjekte ablegen oder abholen. Da die Kollisionsvermeidungsfunktion der mobilen Sensoranordnung abgeschaltet ist, kann sich das Ladefahrzeug auch in der beengten Umgebung des Laderaums ungehindert bewegen.

In einer Weiterbildung erfolgt eine Kommunikation zwischen der stationären Sensoreinrichtung und der mobilen Sensoranordnung unter Benutzung der oben beschriebenen drahtlosen Kommunikationseinrichtung, welche insbesondere als drahtloses lokales Netzwerk, beispielsweise als WLAN, realisiert ist.

Für die Kommunikation zwischen Ladefahrzeug und der stationären Sensoreinrichtung wird ein fachübliches drahtloses Netzwerk verwendet, insbesondere in Verbindung mit entsprechenden Kommunikationsprotokollen, wie beispielsweise TCP/IP. Um die Kommunikation noch weiter abzusichern und die Zuverlässigkeit zu gewährleisten, können bekannte sichere Protokolle wie Enhanced Function Interface, EFI-pro verwendet werden. Die drahtlose Kommunikationsverbindung zwischen dem Ladefahrzeug bzw. seiner mobilen Sensoranordnung und der stationären Sensoreinrichtung wird beispielsweise bei Annäherung des Ladefahrzeugs an den Zugangsbereich aufgebaut. In der stationären Sensoreinrichtung ist dafür ein Zugangspunkt, Englisch Access Point, als Kommunikationsschnittstelle vorgesehen, während die mobile Sensoranordnung einen hierzu passenden Client als Kommunikationsschnittstelle umfasst. Alternativ kann die Kommunikation über Bluetooth oder eine Mobilfunkverbindung gemäß 3G/4G/5G erfolgen.

In einer weiteren Ausführungsform wird bei einer Ausfahrt des Ladefahrzeugs aus dem Laderaum ein Zeitpunkt, an welchem die stationäre Sensoreinrichtung einen Durchfahrtkorridor für die Passage des Zugangsbereichs durch das Ladefahrzeug erschafft, unter Verwendung einer zweiten sicheren Positionsbestimmung ermittelt. Der Durchfahrtkorridor wird durch Anpassen der Absicherung durch die stationäre Sensoreinrichtung geschaffen und wieder geschlossen, sobald das Ladefahrzeug den Zugangsbereich passiert hat. Die stationäre Sensoreinrichtung sichert ab diesem Zeitpunkt den Zugangsbereich ab, indem ein Zugang durch ein Objekt erkannt wird. Ebenfalls ab diesem Zeitpunkt sichert die mobile Sensoranordnung das Ladefahrzeug wieder gegen Kollision ab.

Bei der Ausfahrt des Ladefahrzeugs wird der Zeitpunkt, zu dem der Durchfahrtkorridor für das Ladefahrzeug geöffnet wird, mit der zweiten sicheren Positionsbestimmung ermittelt. Dabei ist es unerheblich, ob das Ladefahrzeug im Laderaum gewendet hat oder nicht, also vorwärts oder rückwärts aus dem Laderaum herausfährt. Die Identität des Fahrzeugs liegt in der stationären Sensoreinrichtung bereits vor. Der Durchfahrtkorridor wird in ähnlicher Art und Weise wie oben beschrieben geschaffen. Sobald das Ladefahrzeug komplett, also in seiner vollen Länge, aus dem Laderaum ausgefahren ist und den Zugangsbereich vollständig passiert hat, wird die Absicherung des Zugangsbereichs durch die stationäre Sensoreinrichtung wieder über die gesamte Breite des Zugangsbereichs aktiviert und die mobile Sensoranordnung aktiviert die Absicherung des Ladefahrzeugs gegen Kollision. Optional kann das Ladefahrzeug sobald es außerhalb des Laderaums angekommen ist, sich aber noch so nah vor dem Zugangsbereich befindet, dass keine Person zwischen das Ladefahrzeug und den Zugangsbereich passt, sicherheitshalber anhalten und erst dann die Weiterfahrt fortsetzen.

**In** einer Weiterbildung umfasst die zweite sichere Positionsbestimmung mindestens einen Durchlauf folgender Schritte:
Erfassen eines Abstands des Ladefahrzeugs von dem Zugangsbereich durch die stationäre Sensoreinrichtung,
Bestimmen einer Position des Ladefahrzeugs durch seine mobile Sensoranordnung und Übermitteln dieser Position an die stationäre Sensoreinrichtung, Plausibilisieren der übermittelten Position des Ladefahrzeugs mit dem erfassten Abstand durch die stationäre Sensoreinrichtung, insbesondere unter Einsatz eines Trackingalgorithmus, und
wenn die plausibilisierte Position einer vordefinierten zweiten Position entspricht, Schaffen des Durchfahrtkorridors,
wobei sich die vordefinierte zweite Position innerhalb des Laderaums so nahe an dem Zugangsbereich befindet, dass keine Person zwischen das Ladefahrzeug und den Zugangsbereich passt.

**In** ähnlicher Art und Weise wie bei der Einfahrt in den Laderaum wird auch bei der Ausfahrt aus dem Laderaum die Position des Ladefahrzeugs zweifach bestimmt, einmal durch Messen des Abstands, beispielsweise unter Verwendung eines optischen Sensors wie einer Kamera der stationären Sensoreinrichtung und zum anderen durch Ermitteln der eigenen Position durch das Ladefahrzeug. Die Ergebnisse werden in der stationären Sensoreinrichtung überprüft. Bei plausiblen Messergebnissen wird zusätzlich getestet, ob die aktuelle Position des Ladefahrzeugs der zweiten vordefinierten Position entspricht. Sofern die Schritte der zweiten sicheren Positionsbestimmung mehrfach durchlaufen werden, kann optional zusätzlich ein Trackingalgorithmus zum Einsatz kommen, welcher die Bewegung des Ladefahrzeugs verfolgt und aufzeichnet. Sobald sich das Ladefahrzeug an der geforderten Stelle, also der zweiten Position, befindet, wird der Durchfahrtkorridor geöffnet.

Gemäß einer Weiterbildung erfolgt das Bestimmen der Position des Ladefahrzeugs durch seine mobile Sensoranordnung unter Verwendung seines Lokalisierungssystems.

Das Erreichen der zweiten vordefinierten Position erkennt das Ladefahrzeug insbesondere mit seinem Lokalisierungssystem. Dieses verwendet, wie beschrieben, in fachüblicher Art und Weise mindestens einen Sensor der mobilen Sensoranordnung und basiert optional zusätzlich auf dem Einsatz einer hinterlegten Karte.

Gemäß einer Weiterbildung wird bei Erkennung der Anwesenheit eines Objekts im Zugangsbereich durch die stationäre Sensoreinrichtung eine Sicherheitsreaktion des Ladefahrzeugs eingeleitet, insbesondere wenn sich dieses zwischen der ersten und der zweiten vordefinierten Position befindet. In dieser Sicherheitsreaktion wird das Fahrzeug angehalten, oder das Ladefahrzeug führt eine Ausgleichsbewegung durch oder es reduziert seine Geschwindigkeit.

Die stationäre Sensoreinrichtung erkennt die Anwesenheit eines Objekts in dem Zugangsbereich. Der Zugangsbereich ist undurchlässig d.h. Objekte oder Personen können nicht unbemerkt eindringen. Eine Ausnahme hiervon besteht lediglich, wenn sich das Ladefahrzeug im Durchfahrtkorridor befindet und dann lediglich für den Teil des Zugangsbereichs, der den Durchfahrtkorridor bildet. Die mobile Sensoranordnung erkennt die Anwesenheit eines Objekts vor oder neben dem Ladefahrzeug. Dadurch werden Kollisionen während der Fahrt des Ladefahrzeugs vermieden, weshalb Objekte vor allem in Fahrtrichtung von Interesse sind. Es können zusätzlich Objekte in anderen Richtungen, zum Beispiel seitlich neben dem Ladefahrzeug, erfasst werden, um Unfälle bei einem Richtungswechsel des Ladefahrzeugs zu vermeiden oder Situationen gerecht zu werden, bei denen von der Seite her eine Person vor das Ladefahrzeug springt. Bei der Erkennung der Anwesenheit eines Objekts durch die stationäre Sensoreinrichtung wird eine Sicherheitsreaktion des Ladefahrzeugs herbeigeführt, insbesondere wenn sich dieses hinter der ersten Sicherheitsposition in Richtung der zweiten Sicherheitsposition befindet, beispielsweise durch Übermittlung eines entsprechenden Befehls über die Kommunikationsverbindung. Hat die mobile Sensoranordnung ein Objekt erkannt, so ist eine mögliche Gefährdung offensichtlich. Diese Absicherung ist jedoch nur außerhalb des Laderaums aktiv. Ein von der stationären Sensoreinrichtung erkanntes Objekt bedeutet, dass sich mindestens ein Objekt in einem Bereich befinden kann, in welchem das Ladefahrzeug nicht darauf vorbereitet ist, insbesondere in dem Laderaum. Deshalb löst erfindungsgemäß die stationäre Sensoreinrichtung bei Erkennung der Anwesenheit eines Objekts die Sicherheitsreaktion aus, insbesondere wenn sich das Ladefahrzeug hinter der ersten Sicherheitsposition in Fahrtrichtung zur zweiten Sicherheitsposition befindet. Je nach Sicherheitskonzept einer Anwendung kann das Ladefahrzeug beispielsweise angehalten werden, eine Ausweichbewegung durchführen oder auf eine sichere langsame Geschwindigkeit von beispielsweise weniger als 0,3 m/s abgebremst werden. Die Sicherheitsreaktion kann optional von einem optischen oder akustischen Warnsignal begleitet oder angekündigt werden.

Das Verfahren kann in einer möglichen Realisierung als computerimplementiertes Verfahren umgesetzt werden. Beispielsweise läuft es in einer Recheneinheit der mobilen Sensoranordnung und/oder einer Recheneinheit der stationären Sensoreinrichtung oder in einer Recheneinheit eines übergeordneten Systems.

In einer Ausführungsform weist ein Absicherungssystem zur Absicherung eines Beladens und/oder Entladens eines Laderaums, insbesondere des Laderaums eines Transportfahrzeugs, mit einem autonomen Ladefahrzeug, das mindestens einmal in den Laderaum einfährt, um mindestens ein Ladeobjekt abzuholen und/oder abzulegen, eine stationäre Sensoreinrichtung und eine mobile Sensoranordnung auf. Die stationäre Sensoreinrichtung ist an einem Zugangsbereich des Laderaums angeordnet und zur Absicherung dieses Zugangsbereichs eingerichtet. Sie weist mindestens einen ersten an dem Zugangsbereich angeordneten Sensor, einen Identifikationssensor sowie eine Kommunikationsschnittstelle zur Kommunikation mit der mobilen Sensoranordnung auf. Die mobile Sensoranordnung ist an dem Ladefahrzeug angeordnet und zur Absicherung des Ladefahrzeugs eingerichtet. Zudem ist sie zum Bereitstellen mindestens einer ersten Identitätsinformation eingerichtet und weist einen zweiten Sensor auf. Zudem umfasst die mobile Sensoranordnung eine Kommunikationsschnittstelle zur Kommunikation mit der stationären Sensoreinrichtung. Die stationäre Sensoreinrichtung ist ferner dazu eingerichtet, das Ladefahrzeug vor einem Einfahren in den Laderaum unter Verwendung des Identifikationssensors und mindestens der ersten Identitätsinformation eindeutig zu identifizieren.

Das erfindungsgemäße Absicherungssystem sichert das Beladen und/oder Entladen des Laderaums gestützt auf die stationäre Sensoreinrichtung und die mobile Sensoranordnung unter anderem dadurch ab, dass das Ladefahrzeug vor einer Einfahrt in den Laderaum sicher identifiziert wird. Nur einem sicher identifizierten Ladefahrzeug wird die Einfahrt in den Laderaum ermöglicht. Ein Zutritt von Personen oder Objekten wird zuverlässig detektiert. Folglich ist es möglich, das Be- und Entladen des Laderaums unter Einhaltung der funktionalen Sicherheit vollständig durch autonome Ladefahrzeuge zu erledigen. Dabei ist zu jedem Zeitpunkt sichergestellt, dass eine Gefährdung von Personen ausgeschlossen ist.

Das oben beschriebene erfindungsgemäße Verfahren wird beispielsweise in dem Absicherungssystem ausgeführt oder durch dieses implementiert. Vorteile und Weiterbildungen gelten entsprechend.

In einer Weiterbildung des Absicherungssystems ist der erste Sensor und/oder der zweite Sensor einer der folgenden: ein einlagiger oder mehrlagiger Laserscanner, ein Lidarsensor, eine 3D-Kamera, insbesondere eine Lichtlaufzeitkamera, ein Radarsensor oder ein Funkortungssystem. Der Identifikationssensor ist einer der folgenden: ein Lesegerät für RFID, ein optischer Scanner für Barcodes oder QR-Codes, oder eine Basisstation für eine Nahbereichsfunkkommunikation, insbesondere ein UWB-Anker.

Die Erfindung wird nachstehend auch hinsichtlich weiterer Merkmale und Vorteile beispielhaft anhand von Ausführungsformen und unter Bezug auf die beigefügte Zeichnung näher erläutert. Dabei tragen gleiche Elemente gleiche Bezugszeichen. Die Abbildungen der Zeichnung zeigen in:
- Fig. 1: eine schematische Übersichtsdarstellung eines Absicherungssystems wie vorgeschlagen;
- Fig. 2: eine schematische Draufsicht auf einen Ladebereich mit möglichen Gefährdungen von Personen durch ein Ladefahrzeug;
- Fig. 3: eine schematische Draufsicht auf einen Ladebereich bei Annäherung eines einfahrenden Ladefahrzeugs an einen abgesicherten Zugangsbereich;
- Fig. 4: eine schematische Draufsicht auf den Ladebereich, in der das einfahrende Ladefahrzeug eine erste vordefinierte Position erreicht hat;
- Fig. 5: eine schematische Draufsicht auf den Ladebereich, in der sich das einfahrende Ladefahrzeug in einem Durchfahrtkorridor durch den abgesicherten Zugangsbereich befindet;
- Fig. 6: eine schematische Draufsicht auf den Ladebereich, nachdem das Ladefahrzeug bei der Ausfahrt in eine zweite vordefinierte Position gefahren ist;
- Fig. 7: eine schematische Draufsicht auf den Ladebereich, in der sich das ausfahrende Ladefahrzeug in dem Durchfahrtkorridor durch den abgesicherten Zugangsbereich befindet; und
- Fig. 8: eine schematische Draufsicht auf den Ladebereich, in der das ausfahrende Ladefahrzeug den Zugangsbereich passiert hat und der Durchfahrtkorridor wieder geschlossen ist.

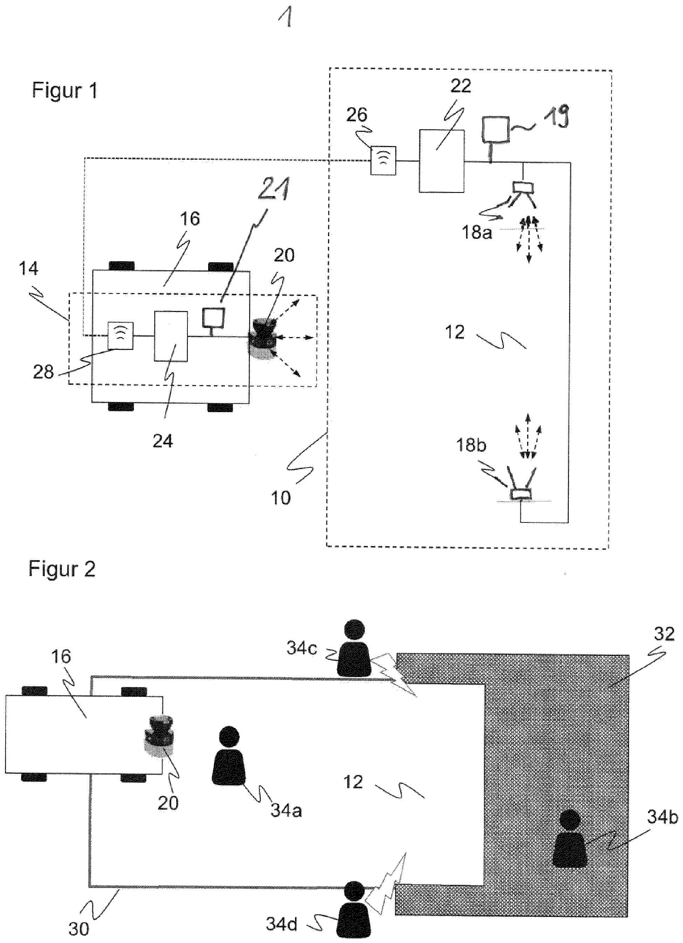

Figur 1 zeigt eine schematische Übersichtsdarstellung eines Absicherungssystems zur Absicherung eines Beladens und/oder Entladens eines Laderaums mit einer stationären Sensoreinrichtung 10 eines Zugangsbereichs 12 und einer mobilen Sensoranordnung 14 eines Ladefahrzeugs 16. Das Ladefahrzeug 16 ist vorzugsweise ein autonomes Fahrzeug, wie ein AGV oder ein AMR, und in der Lage, Ladeobjekte aufzunehmen und abzulegen und so von einem Ort zu einem anderen Ort zu befördern.

Die stationäre Sensoreinrichtung 10 weist mindestens einen vorzugsweise sicheren Sensor 18a-b auf, wobei in den Figuren beispielhaft jeweils zwei Sensoren 18a-b zu beiden Seiten des Zugangsbereichs 12 eingesetzt sind. Die mobile Sensoranordnung 14 weist ebenfalls mindestens einen vorzugsweise sicheren Sensor 20 auf, wobei in den Figuren beispielhaft nur ein Sensor 20 in Fahrtrichtung vorgesehen ist, jedoch mindestens ein weiterer Sensor für eine redundante, eine rückwärtige und/oder eine seitliche Überwachung ergänzt werden kann. Die Sensoren 18a-b und 20 arbeiten nach einem berührungslos wirkenden Sensorprinzip, vorzugsweise nach einem optischen Sensorprinzip wie bei einem Lichtgitter, einem Laserscanner, einem LIDAR-Sensor, einer Kamera oder einer 3D-Kamera, insbesondere Lichtlaufzeit- bzw. TOF-Kamera, aber auch nach nicht-optischen Sensorprinzipien wie bei einem Radar oder Funkortungssystem, insbesondere UWB. Die Sensoren 18a-b und 20 können beliebig aus den genannten und weiteren berührungslos wirkenden Sensoren ausgewählt werden, wobei manche Sensoren sich nicht für die stationäre Sensoreinrichtung 10 und die mobile Sensoranordnung 14 gleichermaßen eignen, beispielsweise ein Lichtgitter nur für die stationäre Sensoreinrichtung 10. Die Erfindung wird im Folgenden beispielhaft mit Laserscannern für die mobile Sensoranordnung und TOF-Kameras für die stationäre Sensoranordnung beschrieben. Die Objekterkennung basiert dabei auf einem Schutzfeldkonzept, auch das ist beispielhaft, da es nur darauf ankommt, auf sichere Weise Objekte und/oder Personen im Zugangsbereich 12 beziehungsweise im jeweiligen Fahrweg des Ladefahrzeugs 16 zu erfassen.

In der stationären Sensoreinrichtung 10 und die mobile Sensoranordnung 14 ist jeweils eine Steuer- und Auswertungseinheit 22, 24 vorgesehen. Die Steuer- und Auswertungsfunktionalität mit dem im Anschluss beschriebenen Verfahren kann praktisch beliebig auf die beiden Steuer- und Auswertungseinheiten 22, 24 und auch mindestens eine externe Steuer- und Auswertungseinheit eines übergeordneten Systems verteilt sein. Vorzugsweise erfolgt jedoch zumindest die jeweilige Objektdetektion beziehungsweise Schutzfeldauswertung nahe bei oder in dem zugehörigen Sensor 18a-b, 20. Als Hardware der Steuer- und Auswertungseinheiten 22, 24 kommen beliebige Recheneinheiten in Betracht, etwa digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein KI-Prozessor, eine NPU (Neural Processing Unit), eine GPU (Graphics Processing Unit) oder dergleichen. Eine externe Recheneinheit kann ein Computer beliebiger Bauart einschließlich Notebook, Smartphone, Tablet, (Sicherheits-)steuerung ebenso sein wie ein lokales Netzwerk, ein Edge-Device oder eine Cloud. Sicherheitsrelevante Teile der Steuerung und Auswertung sind vorzugsweise in sicherer Hardware ausgeführt oder erreichen durch sonstige Maßnahmen wie Redundanz oder Tests ein gefordertes Sicherheitsniveau. Eine erfindungsgemäße, in den Steuer- und Auswertungseinheiten 22, 24 realisierte, Signalverarbeitung ist vorzugsweise in fachüblicher Art und Weise sicher ausgelegt, zum Beispiel durch geeigneten Einsatz von Redundanz, beispielsweise gemäß Safety Integrity Level, SIL1, SIL2 oder SIL3.

Weiterhin ist in der stationären Sensoreinrichtung 10 und der mobilen Sensoreinrichtung 14 jeweils eine Kommunikationsschnittstelle 26, 28 vorgesehen. Darüber stehen die stationäre Sensoreinrichtung 10 und die mobile Sensoranordnung 14 vorzugsweise drahtlos miteinander in Verbindung, um Daten, Informationen und Steuersignale auszutauschen. Die Kommunikationsverbindungen können über eine beliebige drahtlose Kommunikationseinrichtung nach Standards wie Bluetooth, WLAN, Wi-Fi, 3G/4G/5G und prinzipiell jegliches andere Protokoll realisiert sein.

Die stationäre Sensoreinrichtung 10 realisiert die Sicherheitsfunktion Zugangsabsicherung. Es wird also erkannt, wenn sich ein Objekt in dem Zugangsbereich 12 aufhält und insbesondere eine Person hindurchzulaufen versucht. Dabei besteht die Möglichkeit, bestimmte Teile des abgesicherten Zugangsbereichs 12 freizuhalten, um so einen Durchfahrtkorridor zu schaffen, in dem die Sicherheitsfunktion überbrückt oder stummgeschaltet ist (Muting). Dies kann auch durch Umschaltung auf ein Schutzfeld mit einem Freibereich umgesetzt werden.

Die stationäre Sensoreinrichtung 10 umfasst zudem einen Identitätssensor 19. Dieser ist mit der Steuer- und Auswertungseinheit 22 gekoppelt. Der Identitätssensor 19 ist hier beispielhaft als RFID-Leser 19 ausgeführt. Die mobile Sensoreinrichtung 14 ist dazu eingerichtet, eine erste Identitätsinformation bereitzustellen. Dafür umfasst die mobile Sensoreinrichtung 14 im gezeigten Ausführungsbeispiel einen Transponder 21, der hier beispielhaft als RFID-Transponder 21 ausgeführt und mit der Steuer- und Auswertungseinheit 24 gekoppelt ist. Transponder 21 und Leser 19 wirken bei der erfindungsgemäßen sicheren Identifikation des Ladefahrzeugs 14 bei der Einfahrt in den Laderaum 32 zusammen.

Die mobile Sensoreinrichtung 14 realisiert die Sicherheitsfunktion Kollisionsvermeidung des Ladefahrzeugs 16. Dadurch werden Sicherheitsabstände eingehalten und kommen Objekte oder Personen nicht in direkten Kontakt mit dem Ladefahrzeug 16, oder höchstens in einen folgenlosen Kontakt bei minimaler, sicherer Geschwindigkeit des Ladefahrzeugs 16.

Wird ein unzulässiges Objekt in dem Zugangsbereich 12 beziehungsweise vor dem Ladefahrzeug 16 erfasst, so löst dies eine Sicherheitsreaktion des Ladefahrzeugs 16 aus, um Gefährdungen für Personen zu vermeiden. Auf ein Objekt vor dem Ladefahrzeug 16 reagiert die mobile Sensoranordnung 14 sicherheitsgerichtet im Rahmen der eigenen Kollisionsvermeidung. Eine sicherheitsrelevante Situation aufgrund eines Objekts in dem Zugangsbereich 12, wenn sich das Ladefahrzeug zwischen der ersten Position und der zweiten Position befindet, wird der mobilen Sensoranordnung 14 über die Kommunikationsschnittstellen 26, 28 von der stationären Sensoreinrichtung 10 gemeldet. Als jeweilige Sicherheitsreaktion wird das Ladefahrzeug 16 angehalten, führt eine Ausweichbewegung durch oder reduziert seine Geschwindigkeit derart, dass eine Kollision mit einer Person ausgesprochen unwahrscheinlich wird und jedenfalls deren Gesundheit nicht ernstlich gefährden kann. Die Sicherheitsreaktion kann sich unterscheiden, je nachdem, ob sie von der Kollisionsvermeidung oder der Zugangsabsicherung ausgelöst ist.

Mit der mobilen Sensoranordnung 14 und/oder weiterer nicht gezeigter Sensorik ist vorzugsweise zudem ein Lokalisierungssystem des Ladefahrzeugs 16 implementiert. Dazu kann ergänzend eine Karte in der Steuer- und Auswertungseinheit 24 hinterlegt sein. Es ist auch möglich, optische oder physische Marker in der Umgebung der Be-/Entladezone anzubringen. Mit dem Lokalisierungssystem erkennt das Ladefahrzeug 16 insbesondere, dass es sich in einem sicherheitsrelevanten Bereich und nicht mehr beispielsweise in einem abgesperrten, für Personen unzugänglichen Logistikbereich befindet, so dass die mobile Sensoranordnung 14 aktiv zu schalten ist. Außerdem können damit bestimmte relevante, noch zu beschreibende erste und zweite vordefinierte Positionen während des Be-/Entladens erkannt werden.

Figur 1 zeigt ein stationäres Sensoreinrichtung 10 in einer 1:1-Zuordnung zu einer mobilen Sensoranordnung 14. Das ist eine beispielhafte Vereinfachung. Es können ein oder mehrere stationäre Sensoreinrichtungen 10 mit einem oder mehreren mobilen Sensoranordnungen 14 zusammenarbeiten beziehungsweise entsprechende Verbindungen je nach Ort und Aufgabe des Ladefahrzeugs 16 hergestellt oder aufgelöst werden.

Figur 2 zeigt eine schematische Draufsicht auf einen Ladebereich beziehungsweise eine Be-/Entladezone. Der Ladebereich umfasst eine Laderampe 30 und einen Laderaum 32, von dem nur der vordere Teil dargestellt ist. Die Laderampe 30 bildet einen sicherheitsrelevanten Bereich ("confined zone"), weil sich hier Personen aufhalten können. Deshalb muss das Ladefahrzeug 16 zur Vermeidung möglicher Gefährdungen der Personen seine mobile Sensoranordnung 14 aktivieren, die hier vereinfachend und stellvertretend nur mit einem Laserscanner als Sensor 20 dargestellt ist. Figur 2 zeigt einige mögliche Gefährdungen durch eine Person 34a auf der Laderampe 30, eine Person 34b in dem Laderaum 32 oder eine seitlich befindliche Person 34c-d, der insbesondere ein Arm eingequetscht werden könnte. Die mobile Sensoranordnung 14 ist zwar in der Lage, alle diese Personen 34a-d rechtzeitig zu erkennen und eine entsprechende Sicherheitsreaktion einzuleiten. Das Problem besteht darin, dass vor allem innerhalb des Laderaums 32 wegen der dicht gepackten und unbekannten Ladeobjekte praktisch nicht entschieden werden kann, ob sich dort eine Person 34b befindet. Das Ladefahrzeug 16 muss vorsichthalber seine Sicherheitsreaktion einleiten und ist damit so gut wie nicht verfügbar. Andererseits kann die mobile Sensoranordnung 14 nicht einfach deaktiviert werden, weil dann die Sicherheit in den gezeigten und weiteren Positionen von Personen 34a-d nicht gewährleistet wäre.

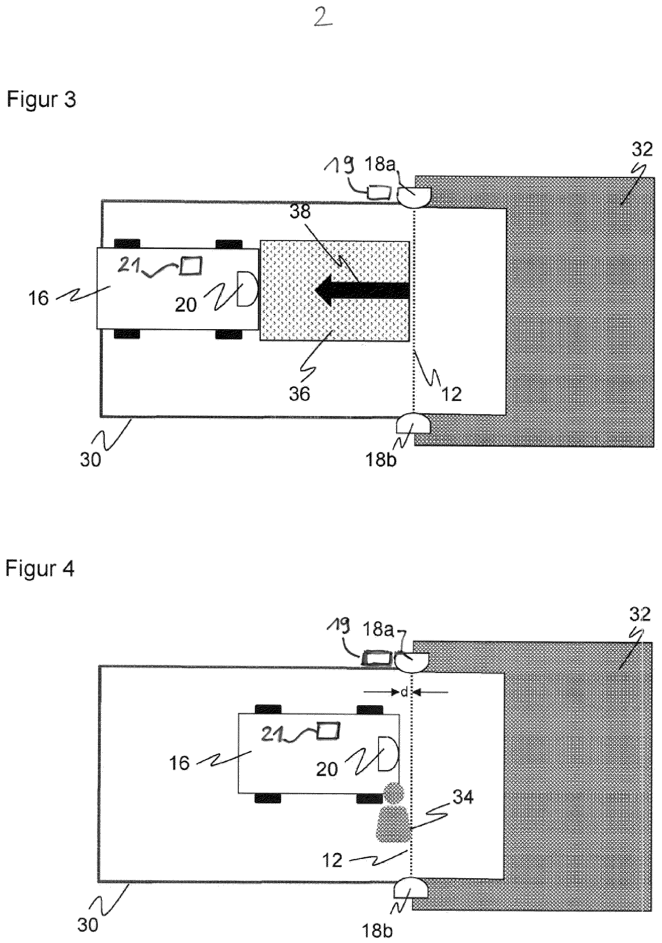

Unter Bezugnahme auf die Figuren 3 bis 8 wird nun das erfindungsgemäße Verfahren zum Be- beziehungsweise Entladen des Laderaums 32 erläutert. Dabei müssen nicht zwangsläufig alle beschriebenen Schritte des besonders bevorzugten Gesamtkonzepts durchgeführt werden. Beispielhaft handelt es sich bei dem Laderaum 32 um den Auflieger eines Lastkraftwagens. Die Erfindung ist jedoch auch für einen anderen Laderaum 32 mit einem andere Vorbereich als der Laderampe 30 einsetzbar.

Figur 3 zeigt eine schematische Draufsicht auf den Ladebereich mit Laderampe 30 und Laderaum 32 bei Annäherung eines einfahrenden Ladefahrzeugs 16. Der Laderaum 32 ist zu allen Seiten mit Ausnahme des Zugangsbereichs 12 geschlossen, über den der Laderaum 32 von der Laderampe 30 aus befahren werden kann. Die stationäre Sensoreinrichtung überwacht den Zugangsbereich 12, so dass kein Objekt und keine Person unbemerkt in den Laderaum 32 gelangt. Von der stationären Sensoreinrichtung werden hier vereinfachend und stellvertretend nur zwei gegenüber angeordnete Laserscanner als Sensoren 18a und 18b sowie der Identifikationssensor 19 dargestellt, die mobile Sensoranordnung des Ladefahrzeugs 16 wird weiterhin von dem Sensor 20 repräsentiert, der außerhalb des Laderaums 32 ein Schutzfeld 36 in Fahrrichtung überwacht.

Zu Beginn eines Be-/Entladevorgangs wird der Auflieger mit dem Laderaum 32 an der Laderampe angedockt, und der Fahrer des Lastkraftwagens oder ein Logistikmitarbeiter öffnet den Auflieger und macht damit den Laderaum 32 über den Zugangsbereich 12 zugänglich. Es folgt eine manuelle Kontrolle, dass sich keine Person in dem Laderaum 32 befindet, durch Nachsehen oder Rufen und dergleichen. Dann wird die stationäre Sensoreinrichtung 10 beispielsweise über einen Taster aktiv geschaltet. Ein derartiger händischer Freigabe- oder (Wieder-)anlaufvorgang für die Inbetriebnahme ist für sicherheitstechnische Anwendungen üblich. Nach der Aktivierung gewährleistet die stationäre Sensoreinrichtung 10, dass kein Zugang erfolgt und der Laderaum 32 frei von Personen bleibt.

Wenn sich das Ladefahrzeug 16 der Laderampe 30 nähert, so erkennt es vorzugsweise mittels seines Lokalisierungssystems, dass es sich nun in einem sicherheitsrelevanten Bereich befindet, und aktiviert spätestens dann das Schutzfeld 36 unter Einsatz seiner mobilen Sensoranordnung 14. Alternativ kann das Schutzfeld 36 stets während der Fahrt des Ladefahrzeugs 16 aktiv sein, mit Ausnahme von Bewegungen, die nach dem Erreichen der ersten vordefinierten Position und der Identifizierung des Fahrzeugs 16 stattfinden, also insbesondere Bewegungen im Laderaum 32. Das Ladefahrzeug 16 beziehungsweise dessen mobile Sensoranordnung 14 baut eine Kommunikationsverbindung zu der stationären Sensoreinrichtung 10 auf. Es fragt beispielsweise an, ob die Zugangsabsicherung betriebsbereit ist, d.h. bisher kein Zugang erfolgt ist und sich demnach keine Person im Laderaum 32 befinden kann. Während der Annährung des Ladefahrzeugs 16 an den abgesicherten Zugangsbereich 12 kann das Schutzfeld 36, wie durch den Pfeil 38 angedeutet, sukzessive verkürzt werden. Eine Überwachung in den Laderaum 32 hinein ist nicht erforderlich, da die stationäre Sensoreinrichtung 10 den Zugang verhindert, so dass ein in den Laderaum 32 hineinragendes Schutzfeld 36 ohnehin keine Person erfassen kann, sehr wohl aber eine Fehlauslösung der Sicherheitsreaktion durch ein Objekt im Laderaum 32 möglich ist.

Figur 4 zeigt eine schematische Draufsicht auf den Ladebereich, in der das einfahrende Ladefahrzeug 16 eine erste vordefinierte Position dicht an dem abgesicherten Zugangsbereich 12 erreicht hat. **In** der ersten vordefinierte Position genügt der Abstand d zwischen Ladefahrzeug 16 und abgesichertem Zugangsbereich 12 nicht mehr, dass eine schattiert angedeutete Person 34 noch dazwischen passen würde. Beispielsweise beträgt der Abstand d 20 cm oder noch weniger, aber auch mit einem etwas größeren Abstand d wie 30 cm, 50 cm oder 70 cm wird es einer Person nicht gelingen, sich zwischen Ladefahrzeug 16 und abgesicherten Zugangsbereich 12 zu schieben, ohne von der stationären Sensoreinrichtung bemerkt zu werden. Das Ladefahrzeug 16 erkennt das Erreichen der ersten Position insbesondere mit seinem sicheren Lokalisierungssystem.

Das Erreichen der ersten vordefinierten Position markiert den Zeitpunkt für die erfindungsgemäße sichere Identifikation des Ladefahrzeugs 16. Dabei wird im hier beschriebenen Beispiel die auf dem Transponder 21 gespeicherte **ID** als erste Identitätsinformation gemäß dem üblichen RFID Verfahren an den Leser 19 übermittelt. In der Steuerungs- und Auswerteeinheit der stationären Sensoreinrichtung wird die ausgelesene ID überprüft, beispielsweise durch Abgleich mit einer dort gespeicherten Identität und einer zweiten Identitätsinformation. Die zweite Identitätsinformation kann beispielsweise die MAC-Adresse der Kommunikationsschnittstelle 28 aus Figur 1, oder eine Adresse auf dem Applikationslayer bzw. der Anwendungsschicht des Protokolls sein, welche beim Anmelden an die stationäre Sensoreinrichtung, insbesondere deren Kommunikationsschnittstelle 26 aus Figur 1, übertragen wurde. Kann das Ladefahrzeug auf diese Weise erfolgreich identifiziert werden, so darf es in den Laderaum 32 einfahren.

Die stationäre Sensoreinrichtung errichtet dazu einen Durchfahrtkorridor. Ein entsprechender Abschnitt des abgesicherten Zugangsbereichs 12 wird stummgeschaltet oder auf eine Schutzfeldkonfiguration umgeschaltet, die den Durchfahrtkorridor freilässt. Dann gibt die stationäre Sensoreinrichtung der mobilen Sensoranordnung die Anweisung, die Kollisionsvermeidung zu deaktivieren und weiter zu fahren. Es ist sichergestellt, dass sich vor dem Ladefahrzeug 16 und damit im Laderaum 32 hinter dem abgesicherten Zugangsbereich 12 keine Person befindet.

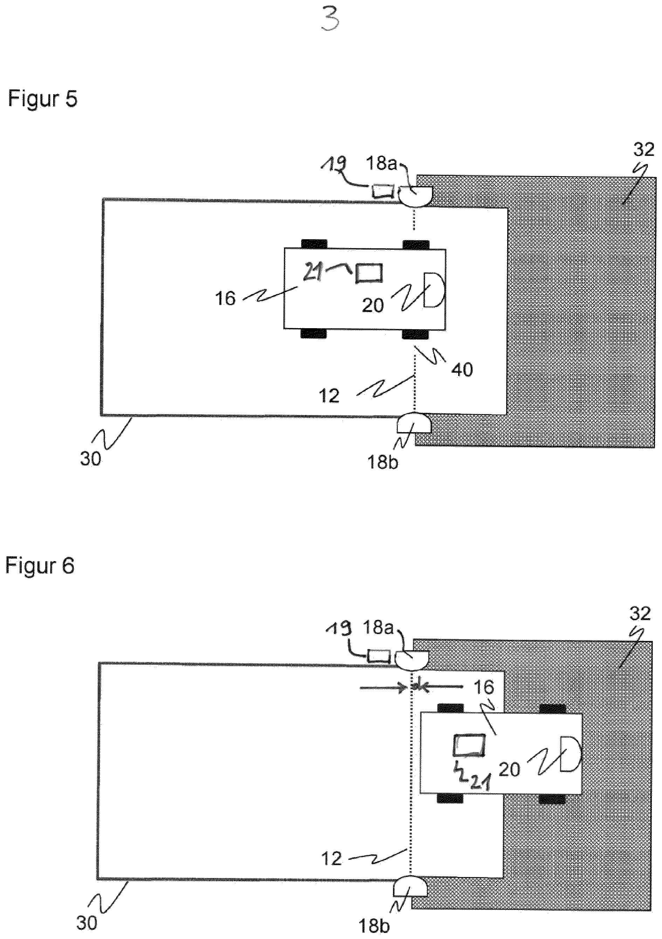

Figur 5 zeigt eine schematische Draufsicht auf den Ladebereich, in der sich das einfahrende Ladefahrzeug 16 in dem freigegebenen oder stummgeschalteten Durchfahrtkorridor 40 des abgesicherten Zugangsbereichs 12 befindet. Lateral, d.h. in einer Dimension quer zur Fahrtrichtung, wird die Lage des Durchfahrtkorridors 40 entweder dynamisch an die laterale Position des Ladefahrzeugs 16 angepasst, oder das Ladefahrzeug 16 wird in eine Position mit einer festen lateralen Position gefahren, so dass die laterale Position eines festgelegten Durchfahrtkorridors 40 zu der lateralen Position des Ladefahrzeugs 16 passt. In den Figuren ist die Fahrtrichtung beispielhaft bei der Einfahrt von links nach rechts, demnach entspricht die laterale Position in der Darstellung der vertikalen Lage. Während der Durchfahrt findet vorzugsweise ein Signalaustausch zwischen der mobilen Sensoranordnung 14 und der stationären Sensoreinrichtung 10 statt, um den Durchfahrtkorridor 40 offenzuhalten.

Wenn das Ladefahrzeug 16 den Zugangsbereich 12 vollständig überfahren hat, wird der Durchfahrtkorridor 40 wieder geschlossen. Das Ladefahrzeug 16 kann sich dann bei weiter inaktiver Kollisionsvermeidung frei im Laderaum 32 bewegen und dort Ladungsobjekte transportieren, insbesondere seine mitgebrachte Ladung absetzen beziehungsweise eine neue Ladung aufnehmen.

Figur 6 zeigt eine schematische Draufsicht auf den Ladebereich, nachdem das Ladefahrzeug 16 ein Ladeobjekt im Laderaum 32 abgelegt oder aufgenommen hat und dabei ist, den Laderaum 32 vorwärts oder rückwärts fahrend wieder zu verlassen. Das Ladefahrzeug 16 ist bereits in eine zweite vordefinierte Position vorgefahren, die sich innerhalb des Laderaums 32 mit Abstand d so nah an dem abgesicherten Zugangsbereich 12 befindet, dass keine Person zwischen Ladefahrzeug 16 und Zugangsbereich 12 passt. Der Durchfahrtkorridor 40 ist noch geschlossen. Mit Hilfe des Lokalisierungssystems des Ladefahrzeugs 16 und der Übermittlung der bestimmten Position an die stationäre Sensoreinrichtung einerseits und der Abstandsmessung durch die stationäre Sensoreinrichtung andererseits erkennt die stationäre Sensoreinrichtung, dass sich das Ladefahrzeug 16 tatsächlich an der geforderten Stelle, nämlich der zweiten vordefinierten Position befindet. Die stationäre Sensoreinrichtung initiiert daraufhin das erneute Schaffen eines Durchfahrtkorridors durch bereichsweises Stummschalten ihrer Absicherung.

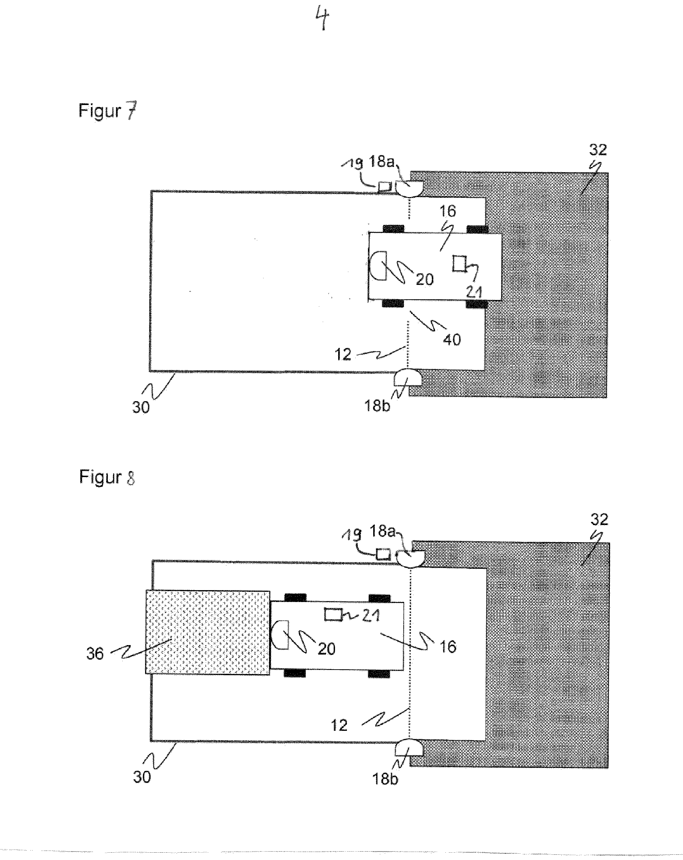

Figur 7 zeigt eine schematische Draufsicht auf den Ladebereich, in der sich das ausfahrende Ladefahrzeug 16 in dem Durchfahrtkorridor 40 durch den abgesicherten Zugangsbereich 12 befindet. Wiederum findet während der Durchfahrt vorzugsweise ein Signalaustausch zwischen der mobilen Sensoranordnung und der stationärem Sensoreinrichtung statt, um den Durchfahrtkorridor 40 während der Durchfahrt offenzuhalten.

Figur 8 zeigt eine schematische Draufsicht auf den Ladebereich, in der das ausfahrende Ladefahrzeug 16 den Zugangsbereich 12 vollständig durchquert hat. Der Zugangsbereich 12 ist wieder geschlossen. Sobald das geschehen ist, sichert die stationäre Sensoreinrichtung wieder den Zugangsbereich 12 gegen Betreten durch Personen ab. Die mobile Sensoranordnung schaltet spätestens jetzt ihren Kollisionsschutz beziehungsweise das Schutzfeld 36 wieder aktiv, da sich vor dem abgesicherten Zugangsbereich 12 eine Person aufhalten kann. Die Aktivierung kann auch schon etwas früher erfolgen, je nachdem, mit welcher Geschwindigkeit sich das Ladefahrzeug 16 bewegt. Das Ladefahrzeug 16 kann sich auf der Laderampe 30 dann wieder in der alleinigen Verantwortung seiner mobilen Sensoranordnung weiterbewegen und beispielsweise das nächste Ladeobjekt holen oder ein aus dem Laderaum 32 mitgebrachtes Ladeobjekt an einem dafür vorgesehenen Ort beispielsweise am Rand der Laderampe 30 oder in einer Logistikhalle absetzen.

Solange der Durchfahrtkorridor 40 offen ist, und dies gilt bei der Ausfahrt wie schon zuvor bei der Einfahrt, verhindert das Ladefahrzeug 16 physisch aufgrund der an das Ladefahrzeug 16 angepassten Abmessungen des Durchfahrtkorridors 40 sowie der dicht an dem abgesicherten Zugangsbereich 12 liegenden ersten Position und zweiten Position ein unbemerktes Eindringen einer Person, die unweigerlich von dem nicht stummgeschalteten Anteil des abgesicherten Zugangsbereichs 12 bemerkt würde.

Sofern zu irgendeinem Zeitpunkt die stationäre Sensoreinrichtung 10 ein Objekt in dem abgesicherten Zugangsbereich 12 erkennt, darf das Ladefahrzeug 16 nicht mehr in den Laderaum 32 einfahren, bis die stationäre Sensoreinrichtung 10 wieder freigegeben ist, was in aller Regel eine manuelle Überprüfung des Laderaums 32 erfordert. Unter Umständen kann das stationäre Absicherungssystem 10 noch eine Bewegungsrichtung differenzieren und ein sich partiell hinein-, dann aber wieder hinausbewegendes Objekt doch noch tolerieren. Ein sich nur hinausbewegendes Objekt deutet darauf hin, dass die anfängliche Freigabe fehlerhaft war, das darf also nicht vorkommen, und hier sollte gegebenenfalls eine grundsätzliche Bestandsaufnahme erfolgen. Sofern sich das Ladefahrzeug 16 schon in dem Laderaum 32 befindet, wenn der abgesicherte Zugangsbereich verletzt wird, muss das Ladefahrzeug 16 anhalten oder mit einer sehr langsamen sicheren Geschwindigkeit beziehungsweise mit aktiver Kollisionsvermeidungsfunktion den Laderaum 32 verlassen.

### Bezugszeichenliste

- 16: Ladefahrzeug
- 18a, 18b, 20: Sensor
- 14: mobile Sensoranordnung
- 10: stationäre Sensoreinrichtung
- 26, 28: Kommunikationseinrichtung
- 22, 24: Steuerung
- 21: Transponder
- 30: Laderampe
- 12: Zugangsbereich
- 32: Laderaum
- 34, 34a, 34b, 34c, 34d: Person
- 36: Schutzfeld
- 38: Pfeil
- 19: Identitätssensor
- 40: Durchfahrtkorridor

## Patentansprüche

1. Verfahren zum Beladen und/oder Entladen eines Laderaums (32), insbesondere des Laderaums (32) eines Transportfahrzeugs, mit einem autonomen Ladefahrzeug (16), das mindestens einmal in den Laderaum (32) einfährt, um mindestens ein Ladeobjekt abzuholen und/oder abzulegen, wobei ein Zugangsbereich (12) des Laderaums (32) durch eine stationäre, an dem Zugangsbereich angeordnete Sensoreinrichtung (10) abgesichert wird, wobei das Ladefahrzeug (16) durch eine an dem Ladefahrzeug (16) angeordnete mobile Sensoranordnung (14) abgesichert wird,
wobei die stationäre Sensoreinrichtung (10) und die mobile Sensoranordnung (14) miteinander kommunizieren, und
wobei das Ladefahrzeug (16) vor einem Einfahren in den Laderaum (32) unter Verwendung eines von der stationären Sensoreinrichtung (10) umfassten Identifikationssensors (19) und mindestens einer ersten von der mobilen Sensoranordnung (14) bereitgestellten Identitätsinformation durch die stationäre Sensoreinrichtung (10) eindeutig identifiziert wird.

2. Verfahren nach Anspruch 1,
wobei ein Zeitpunkt, an welchem das Ladefahrzeug (16) eindeutig identifiziert wird, unter Verwendung einer ersten sicheren Positionsbestimmung ermittelt wird.

3. Verfahren nach dem vorstehenden Anspruch,
wobei die erste sichere Positionsbestimmung mindestens einen Durchlauf folgender Schritte umfasst:
Erfassen eines Abstands des Ladefahrzeugs (16) von dem Zugangsbereich (12) durch die stationäre Sensoreinrichtung (10),
Bestimmen einer Position des Ladefahrzeugs (16) durch seine mobile Sensoranordnung (14) und Übermitteln dieser Position an die stationäre Sensoreinrichtung (10),
Plausibilisieren der übermittelten Position des Ladefahrzeugs (16) mit dem erfassten Abstand durch die stationäre Sensoreinrichtung (10), insbesondere unter Einsatz eines Tracking-Algorithmus, und
wenn die plausibilisierte Position einer vordefinierten ersten Position entspricht, Starten des eindeutigen Identifizierens des Ladefahrzeugs (16) durch die stationäre Sensoreinrichtung (10),
wobei die vordefinierte erste Position sich außerhalb des Laderaums (32) so nahe an dem Zugangsbereich (12) befindet, dass keine Person zwischen das Ladefahrzeug (16) und den Zugangsbereich (12) passt.

4. Verfahren nach dem vorstehenden Anspruch,
wobei das Bestimmen der Position des Ladefahrzeugs (16) durch seine mobile Sensoranordnung (14) unter Verwendung eines Lokalisierungssystems auf Basis einer oder mehrerer der folgenden Maßnahmen erfolgt:
einer in der mobilen Sensoranordnung hinterlegten Karte,
einer Erkennung optischer oder physischer Marker, die im Zugangsbereich angebracht sind,
einer Indoor-Navigation.

5. Verfahren nach einem der vorstehenden Ansprüche,
wobei beim eindeutigen Identifizieren des Ladefahrzeugs (16) folgende Schritte ausgeführt werden:
berührungsloses Auslesen der von der mobilen Sensoranordnung (14) bereitgestellten ersten Identitätsinformation durch den Identitätssensor (19) der stationären Sensoreinrichtung (10),
Überprüfen der ersten Identitätsinformation durch die stationäre Sensoreinrichtung (10) unter Verwendung einer gespeicherten Identität und einer zweiten von der mobilen Sensoranordnung (14) übermittelten Identitätsinformation, welche sich von der ersten Identitätsinformation unterscheidet.

6. Verfahren nach dem vorstehenden Anspruch,
wobei das berührungslose Auslesen der von der mobilen Sensoranordnung (14) bereitgestellten ersten Identitätsinformation unter Verwendung einer der folgenden Mittel erfolgt: Radiofrequenzidentifizierung, RFID, optisches Auslesen, Nahbereichsfunkkommunikation, insbesondere UWB, und wobei die bereitgestellte erste Identitätsinformation dementsprechend eines der folgenden umfasst: eine Radiofrequenzidentifizierungs-Transponder-ID, einen Barcode, einen QR-Code, eine Nahbereichsfunkkommunikation-Transponder-ID, insbesondere eine UWB-Transponder-ID.

7. Verfahren nach dem Anspruch 5 oder 6,
wobei das Übermitteln der zweiten Identitätsinformation der mobilen Sensoranordnung (14) an die stationäre Sensoreinrichtung (10) über eine drahtlose Kommunikationseinrichtung (26, 28), insbesondere ein drahtloses lokales Netzwerk, insbesondere ein WLAN, erfolgt und wobei die zweite Identitätsinformation dementsprechend eine Gerätekennung, insbesondere eine MAC-Adresse, oder eine applikationsspezifische Kennung ist.

8. Verfahren nach einem der vorstehenden Ansprüche,
wobei nach einer erfolgreichen eindeutigen Identifizierung des Ladefahrzeugs (16) die Absicherung des Zugangsbereichs (12) durch die stationäre Sensoreinrichtung derart angepasst wird, dass ein Durchfahrtkorridor (40) für ein Einfahren des Ladefahrzeugs (16) in den Laderaum (32) geschaffen wird, und die Absicherung der mobilen Sensoranordnung (14) deaktiviert wird,
wobei der Durchfahrtkorridor (40) geschlossen wird, sobald das Ladefahrzeug (16) den Zugangsbereich (12) passiert hat und wobei die stationäre Sensoreinrichtung (10) ab diesem Zeitpunkt den Zugangsbereich (12) absichert indem ein Zugang durch ein Objekt erkannt wird.

9. Verfahren nach einem der vorstehenden Ansprüche,
wobei eine Kommunikation zwischen der stationären Sensoreinrichtung (10) und der mobilen Sensoranordnung (14) unter Benutzung einer drahtlosen Kommunikationseinrichtung (26, 28), insbesondere eines drahtlosen lokalen Netzwerks, beispielsweise WLAN, erfolgt.

10. Verfahren nach einem der vorstehenden Ansprüche,
wobei bei einer Ausfahrt des Ladefahrzeugs (16) aus dem Laderaum (32) ein Zeitpunkt, an welchem ein Durchfahrtkorridor (40) für die Passage des Zugangsbereichs (12) durch das Ladefahrzeug (16) durch Anpassen der Absicherung durch die stationäre Sensoreinrichtung (10) geschaffen wird, unter Verwendung einer zweiten sicheren Positionsbestimmung ermittelt wird,
wobei der Durchfahrtkorridor (40) geschlossen wird, sobald das Ladefahrzeug (16) den Zugangsbereich (12) passiert hat und wobei die stationäre Sensoreinrichtung (10) ab diesem Zeitpunkt den Zugangsbereich (12) absichert, indem ein Zugang durch ein Objekt erkannt wird, und die mobile Sensoranordnung (14) das Ladefahrzeug (16) gegen Kollision absichert.

11. Verfahren nach dem vorstehenden Anspruch,
wobei die zweite sichere Positionsbestimmung mindestens einen Durchlauf folgender Schritte umfasst:
Erfassen eines Abstands des Ladefahrzeugs (16) von dem Zugangsbereich (12) durch die stationäre Sensoreinrichtung (10),
Bestimmen einer Position des Ladefahrzeugs (16) durch seine mobile Sensoranordnung (14) und Übermitteln dieser Position an die stationäre Sensoreinrichtung (10),
Plausibilisieren der übermittelten Position des Ladefahrzeugs (16) mit dem erfassten Abstand durch die stationäre Sensoreinrichtung (10), insbesondere durch Verwendung eines Tracking-Algorithmus, und
wenn die plausibilisierte Position einer vordefinierten zweiten Position entspricht, Schaffen des Durchfahrkorridors (40),
wobei sich die vordefinierte zweite Position innerhalb des Laderaums (32) so nahe an dem Zugangsbereich (12) befindet, dass keine Person zwischen das Ladefahrzeug (16) und den Zugangsbereich (12) passt.

12. Verfahren nach dem vorstehenden Anspruch,
wobei das Bestimmen der Position des Ladefahrzeugs (16) durch seine mobile Sensoranordnung (14) unter Verwendung eines sicheren Lokalisierungssystems erfolgt.

13. Verfahren nach einem der vorstehenden Ansprüche,
wobei bei Erkennung der Anwesenheit eines Objekts im Zugangsbereich (12) durch die stationäre Sensoreinrichtung (10) eine Sicherheitsreaktion des Ladefahrzeugs (16) eingeleitet wird, in welcher das Ladefahrzeug (16) angehalten wird, oder eine Ausweichbewegung durchführt oder seine Geschwindigkeit reduziert.

14. Absicherungssystem zur Absicherung eines Beladens und/oder Entladens eines Laderaums (32), insbesondere des Laderaums (32) eines Transportfahrzeugs, mit einem autonomen Ladefahrzeug (16), das mindestens einmal in den Laderaum (32) einfährt, um mindestens ein Ladeobjekt abzuholen und/oder abzulegen,
wobei das Absicherungssystem eine stationäre, an einem Zugangsbereich (12) des Laderaums (32) angeordnete Sensoreinrichtung (10) und eine an dem Ladefahrzeug (16) angeordnete mobile Sensoranordnung (14) aufweist,
wobei die stationäre Sensoreinrichtung (10) zur Absicherung des Zugangsbereichs (12) des Laderaums (32) eingerichtet ist und mindestens einen ersten an dem Zugangsbereich (12) angeordneten Sensor (18a, 18b), einen Identifikationssensor (19) und eine Kommunikationsschnittstelle (26) zur Kommunikation mit der mobilen Sensoranordnung (14) aufweist, wobei die mobile Sensoranordnung (14) zur Absicherung des Ladefahrzeugs (16) und zum Bereitstellen mindestens einer ersten Identitätsinformation eingerichtet ist und mindestens einen zweiten Sensor (20) sowie eine Kommunikationsschnittstelle (28) zur Kommunikation mit der stationäre Sensoreinrichtung (10) aufweist,
wobei die stationäre Sensoreinrichtung (20) dazu eingerichtet ist, das Ladefahrzeug (16) vor einem Einfahren in den Laderaum (32) unter Verwendung des Identifikationssensors (19) und mindestens der ersten Identitätsinformation eindeutig zu identifizieren.

15. Absicherungssystem nach dem vorstehenden Anspruch,
wobei der erste Sensor und/oder der zweite Sensor (18a, 18b, 20) einer der folgenden ist: ein einlagiger oder mehrlagiger Laserscanner, ein LIDAR-Sensor, eine 3D-Kamera, insbesondere eine Lichtlaufzeitkamera, ein Radarsensor oder ein Funkortungssystem,
wobei der Identifikationssensor (19) einer der folgenden ist: ein Lesegerät für eine Radiofrequenzidentifizierung, RFID, ein optischer Scanner für Barcodes oder QR-Codes, oder eine Nahbereichsfunkkommunikations-Basisstation, insbesondere ein UWB-Anker.
